# FASCICULE DE BREVET EUROPEEN

(11) **EP 1 980 130 B1**
(45) Date de publication et mention de la délivrance du brevet: **23.06.2021**
(21) Numéro de dépôt: 07730890.6
(22) Date de dépôt: 30.01.2007
(51) Int. Cl.: H04W 8/10, H04W 4/029, H04W 76/50, H04W 4/90, H04W 4/02

(54) **LOCALISATION ET ROUTAGE D'UN APPEL**
ORTUNG UND LEITUNG EINES ANRUFS
LOCATING AND ROUTING A CALL

(30) Priorité: 31.01.2006 FR 0600877
(43) Date de publication de la demande: 15.10.2008
(73) Titulaire: ORANGE, 75015 Paris (FR)
(72) Inventeur: OULAHAL, Rachid, F-31100 Toulouse (FR); PINATEL, Boris, F-75015 Paris (FR)
(74) Mandataire: Plasseraud IP
(86) Numéro de dépôt international: PCT/FR2007/000173
(87) Numéro de publication internationale: WO 2007/088270

(56) Documents cités:
- WO-A-2005/004521
- WO-A1-2004/021733
- GB-A- 2 371 454
- US-A1- 2005 024 265
- OCG EMTEL: "Liaison Statement on EC Requirements on Emergency Telecommunications", 3GPP DRAFT; SP-030394, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG SA, no. Frankfurt, GERMANY; 20030910, 10 September 2003 (2003-09-10), XP050200117,
- GARCIA-MARTIN M ET AL: "Network Working Group Request for Comments: 3455 Category: Informational", HEISEI 15 NEN 1 GATSU 31 NICHI, [RETRIEVAL DATE HEISEI 21 NEN 5 GATSU 11 NICHI],, 1 January 2003 (2003-01-01), pages 2-34, XP008139971,

## Description

La présente invention concerne le domaine des télécommunications, et plus particulièrement la mise en œuvre de services de télécommunications basés sur un routage d'appel et une localisation de l'appel.

Certains systèmes de télécommunications offre un service basé sur la localisation d'un appelant. Il en est ainsi notamment pour les services adaptés pour traiter les appels d'urgence, ou encore pour certains services de livraison qui en fonction d'informations relatives à l'appel reçu sont adaptés pour déterminer le lieu d'une livraison au domicile de l'appelant par exemple.

Dans le contexte des appels d'urgence, par exemple, les systèmes de télécommunications comprennent un centre d'appels destiné à traiter ce type d'appel. Sur réception d'un appel d'urgence, un tel centre d'appels est classiquement en mesure de prodiguer une aide à l'appelant. A cet effet, l'appelant est généralement localisé afin de pouvoir, le cas échéant, lui faire parvenir cette aide à l'emplacement où il se trouve. Ainsi, dans ce type de système de télécommunications, il est important d'établir une communication avec l'appelant et de localiser l'appelant.

Pour ce faire, de tels systèmes sont adaptés pour fournir un service d'urgence qui peut être défini par le routage d'un appel d'urgence vers un centre d'appels (ou encore LER pour 'Location Enabled Routing'), et la transmission d'une information de localisation de l'appelant à ce centre d'appels (ou encore LIP pour 'Location Information Presentation').

Certaines normes définissent certaines caractéristiques de ce type de services d'urgence, comme par exemple les normes définies en Europe par le groupe CGALIES (pour 'Coordination Group on Access to Location Information by Emergency Services').

Dans les systèmes de télécommunications fixes, tels que ceux basés sur des RTC, pour 'Réseau Téléphonique Public Commuté', un identifiant de zone géographique relatif au premier commutateur qui prend en charge l'appel initié, permet de rediriger l'appel vers le centre d'appels adapté pour traiter l'appel d'urgence. On peut ainsi router l'appel vers un centre d'appels depuis lequel l'appelant est facilement accessible. La localisation de l'appelant se base sur une association enregistrée entre le numéro d'abonné de l'appelant et son adresse, c'est à dire que la localisation est effectuée à partir d'un annuaire. Mais une telle mise en oeuvre est conçue pour une architecture classique de réseau de type RTC et n'est pas aisément transposable à des réseaux de télécommunications mobiles.

En effet, dans les systèmes de télécommunications mobiles, le numéro de l'appelant ne permet pas de déterminer sa localisation. Il en est de même des systèmes de télécommunications en VoIP (pour 'Voice over Internet Protocol') dans lesquels les utilisateurs peuvent être nomades. Ainsi, dans un tel contexte, le routage de l'appel d'urgence et la localisation de l'appelant sont plus complexes à mettre en œuvre.

Pour ces systèmes de télécommunications mobiles, des spécifications fournies par l'organisme de normalisation 3GPP (pour '3rd Generation Partnership Program') proposent certaines solutions pour la mise en place d'un service d'urgence. Toutefois, de telles spécifications ne détaillent pas une implémentation d'un service d'urgence de bout en bout.

Le document 'Emergency call positioning' de Mikka Poikselkä, propose une mise en œuvre d'un service d'urgence dans un système de télécommunications mobiles basé sur un réseau à commutation de circuit ou encore sur un réseau à commutation de paquets. Ce document propose d'implémenter un service d'urgence dans un réseau de type IMS, pour 'Internet protocol Multimedia Subsystem', tel que défini par le 3GPP, notamment dans le document TR 23.867. Dans un tel réseau IMS comprenant une entité P-CSCF, pour 'Proxy Call Session Control Function', représentant un premier point de contacts pour les terminaux dans l'IMS, et une entité S-CSCF, pour 'Serving Call Session Control Function', qui est en charge de contrôler les sessions d'un terminal pendant toute la période où ce dernier est enregistré dans l'IMS, l'étape de localisation de l'appelant est réalisée par un serveur de localisation qui peut être relié à l'entité S-CSCF. Dans ce contexte, un terminal se connecte à ce réseau IMS via un réseau cœur de type GPRS, pour 'General Packet Radio Service'. Puis, l'entité S-CSCF requiert auprès d'un serveur de localisation, une localisation de l'appelant.

Une telle solution permet de mettre en œuvre un service d'urgence dans une architecture de réseau comprenant un centre d'appels relié au réseau IMS auquel le terminal de l'appelant se connecte.

Mais, il est possible qu'un réseau IMS ne soit pas relié à un centre d'appels d'urgence. Ainsi, un terminal initiant un appel d'urgence peut se connecter à un réseau IMS qui n'est pas relié au centre d'appels d'urgence en charge de la gestion des appels d'urgence dans la zone géographique où se situe le terminal.

WO2005004521 traite d'appels d'urgence, qui sont acheminés en fonction de la localisation d'un abonné mobile dans un réseau sans fil cellulaire.

US2005024265 concerne le routage d'appel d'urgence en fonction de la localisation d'un mobile appelant.

Les inconvénients précités relatifs à un service d'urgence sont transposables à tout autre type de service de télécommunications qui se base, comme un service d'urgence, sur une localisation d'appel et un routage d'appel vers un centre d'appels adapté pour offrir le service requis par le type d'appel reçu.

La présente invention est définie par les revendications indépendantes 1 et 4-6.

Dans le contexte de la présente invention, les termes 'une fonction de localisation associée à un sous-système de télécommunications' signifient que la fonction de localisation considérée est une fonction locale au sous-système auquel elle est associée, adaptée pour déterminer une information de localisation d'un terminal situé dans ce sous-système.

Les termes 'une fonction de localisation adaptée pour coopérer avec le centre d'appels', signifient que le centre d'appels et la fonction de localisation sont adaptés pour transmettre, respectivement recevoir, des informations de localisation entre eux.

Grâce à ces dispositions, un service de routage et de localisation d'appel de bout en bout peut avantageusement être fourni, de manière efficace et rapide, à un terminal qui se situe dans un sous-système de télécommunications auquel le centre d'appels en charge de la gestion des appels dans la zone géographique dans laquelle se situe le terminal n'est pas relié. En effet, dans un tel procédé, l'appel est routé vers un centre d'appels qui est relié au second sous-système, alors que le terminal se connecte au système via le premier sous-système.

En outre, un tel procédé offre un service de routage et de localisation d'appel dans lequel l'étape de localisation de l'appelant et l'étape de routage de l'appel sont avantageusement réalisées de manière parallèle l'une par rapport à l'autre au niveau du premier sous-système de télécommunications. Ainsi, le routage de l'appel peut être réalisé rapidement, sans attendre la réalisation d'une étape de localisation du terminal, telle qu'une étape gérée dans un contexte de LIP, comme précédemment évoqué.

La présente invention n'est pas limitée dans le mécanisme d'association du centre d'appels à la seconde fonction de localisation.

La seconde fonction de localisation peut tenir à la disposition du centre d'appels l'information de localisation reçue depuis la première fonction de localisation. Ainsi, le centre d'appel peut recevoir cette information de localisation lorsqu'il décide qu'il a besoin d'une telle information. Le centre d'appels émet alors une requête à destination de la seconde fonction de localisation.

Dans une autre variante, la seconde fonction de localisation transmet l'information de localisation au centre d'appels sans attendre de requête de sa part.

La seconde fonction de localisation est une fonction associée au second sous-système. Elle est alors déterminée en fonction du centre d'appels considéré.

Ainsi, la seconde fonction de localisation étant associée au second sous-système, et ce dernier étant relié au centre d'appels, cette seconde fonction de localisation se trouve alors être adaptée pour coopérer avec le centre d'appels par l'intermédiaire du second sous-système. Dans ce contexte, le centre d'appels peut recevoir l'information de localisation du terminal appelant depuis la fonction de localisation du second sous-système, sans connaître le premier sous-système, c'est-à-dire le sous-système dans lequel l'appel est initié.

Ainsi, grâce à de telles dispositions, un centre d'appels peut avantageusement gérer une unique interface pour la gestion des appels liés au service considéré, celle qui lui permet de communiquer avec le serveur de localisation avec lequel il coopère, contrairement à ce que certaines autres architectures imposent.

La seconde fonction de localisation est une fonction de localisation globale au système de télécommunications. Dans ce contexte, le centre d'appels requerre l'information de localisation auprès de la fonction globale de localisation.

Une telle fonction globale permet de centraliser les informations de localisation des appelants dans le système de sorte à les fournir le cas échéant aux centres d'appels qui pourraient en avoir besoin pour fournir le service de routage et de localisation d'appel. Une telle centralisation des informations permet également de fournir ces informations en vue d'offrir d'autres services dans un tel système de télécommunications. Ainsi, plusieurs services de ce type de système de télécommunications peuvent être avantageusement basés sur ces informations de localisation. En effet, par exemple, ces informations de localisation peuvent être utilisées dans le contexte des services d'appels d'urgence et dans le contexte des services de livraison tel que énoncés ci-avant, pour un même système de télécommunications.

Lorsque le système comprend une pluralité de centre d'appels, une fonction de routage est adaptée pour sélectionner, en fonction d'une information d'aide au routage reçue depuis le terminal, un centre d'appels pour router le message d'initiation d'appel.

Par exemple, dans le contexte des services d'urgence, cette fonction de routage peut être commune aux sous-systèmes de télécommunications, et de ce fait une centralisation des informations permettant de sélectionner un centre d'appels pour traiter un appel d'urgence peut être mise en oeuvre. Ainsi, une telle base de données centralisée peut avantageusement être utilisée pour d'autres services offerts dans le système considéré.

Par conséquent, le routage d'un appel, par exemple un appel d'urgence, peut être réalisé de manière efficace sur la base d'une information d'aide au routage, tout en n'introduisant pas un délai correspondant à la réalisation d'une étape de localisation du terminal. Une telle information d'aide au routage est déterminée en fonction des informations présentes dans le message d'initiation d'appel reçu. Une telle information d'aide au routage correspond à une information relative au type d'accès réseau, qui est indiquée dans le message d'initiation d'appel, telle que l'information indiquée dans le champ 'P Access Network Info', tel que défini dans le document RFC 3455 (pour 'Request For Comment') qui peut être insérée par le terminal ou encore par l'entité P-CSCF.

Plus généralement, la présente invention couvre tout type de routage basé sur une information comprise dans le message d'initiation d'appel.

Dans ce contexte, on peut prévoir que le centre d'appels requiert, auprès de la seconde fonction de localisation, l'information de localisation du terminal lorsque l'indication de localisation approximative est considérée comme insuffisante par le service de routage et de localisation d'appel. En effet, si l'indication de localisation approximative reçue par le centre d'appels dans le message d'initiation d'appel est suffisante pour apporter l'aide requise à l'appelant, le centre d'appels peut décider de ne pas requérir, auprès de la seconde fonction de localisation, l'information de localisation du terminal, qui précise la localisation du terminal.

L'identifiant du terminal peut comprendre un numéro d'appel du terminal dans le système de télécommunications, comme un numéro de rappel ou 'Callback Number'.

L'invention sera également mieux comprise à l'aide des dessins, sur lesquels :
- la figure 1 illustre l'architecture d'un réseau IP multimédia de type IMS normalisée pour le 3GPP ;
- la figure 2 illustre une architecture d'un système de télécommunications;
- les figures 3-5 illustrent un échange de messages pour le traitement d'un appel dans un système de télécommunications;
- la figure 6 illustre une variante d'architecture relative à la mise en œuvre d'une étape de localisation selon un mode de réalisation de l'invention ;
- la figure 7 illustre un dispositif de routage; et
- la figure 8 illustre un serveur de localisation; et
- la figure 9 illustre un serveur de localisation global.

La présente invention est décrite ci-après dans son application à une architecture de réseau telle que définie par le 3GPP dans le contexte des réseaux de type IMS. Toutefois, il convient de noter qu'aucune limitation quant au type de réseau de télécommunications, notamment fixe ou mobile, n'est attachée à l'application d'un mode de réalisation de la présente invention.

En outre, à titre illustratif uniquement, les sections suivantes décrivent la présente invention dans son application à un service de traitement d'appels d'urgence. Mais une telle description est aisément transposable à la mise en œuvre de tout autre service de télécommunications basé sur un routage et une localisation d'appel, tel que notamment les services de livraison à domicile.

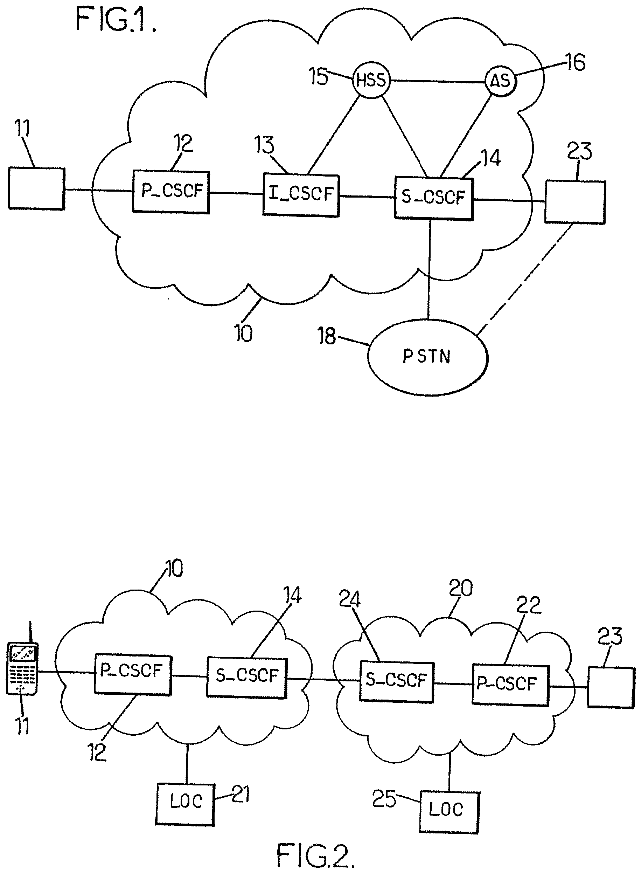

On se réfère ici à la figure 1 pour décrire l'architecture d'un réseau IP 10 multimedia de type IMS. Le cœur de l'architecture IMS est composé d'équipements CSCF (pour "Call State Control Functions") qui permettent de contrôler les sessions multimédia dans le réseau de type IMS et interagissent avec d'autres entités du réseau de type IMS tels que des serveurs d'application. On distingue plusieurs types d'équipements CSCFs dans l'architecture de réseau de type IMS :
- une entité P-CSCFs (pour "Proxy-CSCF") 12, qui est le premier points de contacts pour les terminaux dans l'IMS ;
- une entité S-CSCFs (pour "Serving-CSCF") 14, pour contrôler les sessions d'un terminal pendant toute la période où ce dernier est enregistré dans l'IMS ;et
- une entité I-CSCFs (pour "Interrogating-CSCF") 13, qui représente un point d'entrée du réseau pour des sessions multimédia entre un utilisateur du réseau et un utilisateur appartenant à un autre réseau du même type.

Les entités I-CSCF 13 et S-CSCF 14 peuvent être reliées à un serveur HSS 15 (pour "Home Subscriber Server"), qui opère en tant que HLR (pour "Home Location Register") et contient en outre des fonctions relatives au domaine IP multimédia.

Une telle architecture comprend en outre un serveur d'application, ou AS pour 'Application Server' 16.

Un terminal 11 peut se connecter au réseau IMS 10.

Des centres d'appels d'urgence 23, ou PSAP pour 'Public Safety Answering Point', peuvent être reliés à une telle architecture via un réseau GSTN 18, pour 'General Switched Telephone Network' ou PSTN pour 'Public Switched Telephone Network' analogique ou numérique, ou encore directement via une session protocolaire adaptée de type SIP, pour 'Session Initiation Protocol' par exemple. Un centre d'appels d'urgence PSAP peut également être relié à une telle architecture via une liaison de type NGN, pour 'Next Generation Networks', c'est-à-dire une liaison selon le protocole IP permettant la transmission de données et de la voie.

La figure 2 illustre une architecture de système de télécommunications. Une premier sous-système de télécommunications 10, comprenant une entité P-CSCF 12 et une entité S-CSCF 14 est relié à un second sous-système de télécommunications 20 comprenant une entité S-CSCF 24 et une entité P-CSCF 22. Les premier et second sous-systèmes correspondent chacun à un réseau de type IMS tel que celui décrit en référence à la figure 1 et sont reliés entre eux par l'intermédiaire des entités S-CSCF 14 et S-CSCF 24.

A chacun de ces premier et second sous-systèmes sont respectivement associées des première et seconde fonctions de localisation adaptées pour déterminer une information de localisation d'un terminal qui est connecté dans leur sous-système respectif. Dans un mode de réalisation de la présente invention, ces première et seconde fonctions de localisation sont mises en œuvre respectivement dans des serveurs de localisation 21 et 25. Ces serveurs de localisation peuvent correspondre à des entités de réseau GMLC pour 'Gateway Mobility Location Center', tels que définis dans le document 3 GPP TS 23.271, ou encore correspondre à une entité de serveur de localisation tel que décrit dans la norme OMA/MLP v3.1 ou tout autre type d'entité capable de déterminer la localisation d'un utilisateur ou d'un équipement. Il convient toutefois de noter qu'une fonction de localisation d'un terminal peut être mis en oeuvre sur une quelconque entité de réseau du système.

Un serveur de localisation peut notamment réaliser des fonctions d'authentification, de vérification des souscriptions aux services requis, de localisation des utilisateurs, de conversion de format de l'information de localisation en fonction du service requérant cette information.

Le second sous-système 20 est en outre adapté pour coopérer avec un centre d'appels d'urgence 23.

La présente invention ne présente aucune limitation quant au type de liaison entre le centre d'appels d'urgence vers lequel un appel est routé et le réseau de télécommunications auquel ce centre d'appels est connecté. Ainsi, le centre d'appels d'urgence peut être directement relié via une entité P-CSCF au second sous-système 20, ou encore il peut être relié au second sous-système via une entité réseau de routage, telle qu'une passerelle par exemple. Les sections suivantes décrivent dans ces différents contextes, les échanges de messages entre les différentes entités du système requis pour une mise en œuvre de l'invention dans un mode de réalisation.

Selon un mode de réalisation de la présente invention, les étapes de routage d'appels urgents et de localisation de l'appelant peuvent avantageusement être réalisées de manière parallèle.

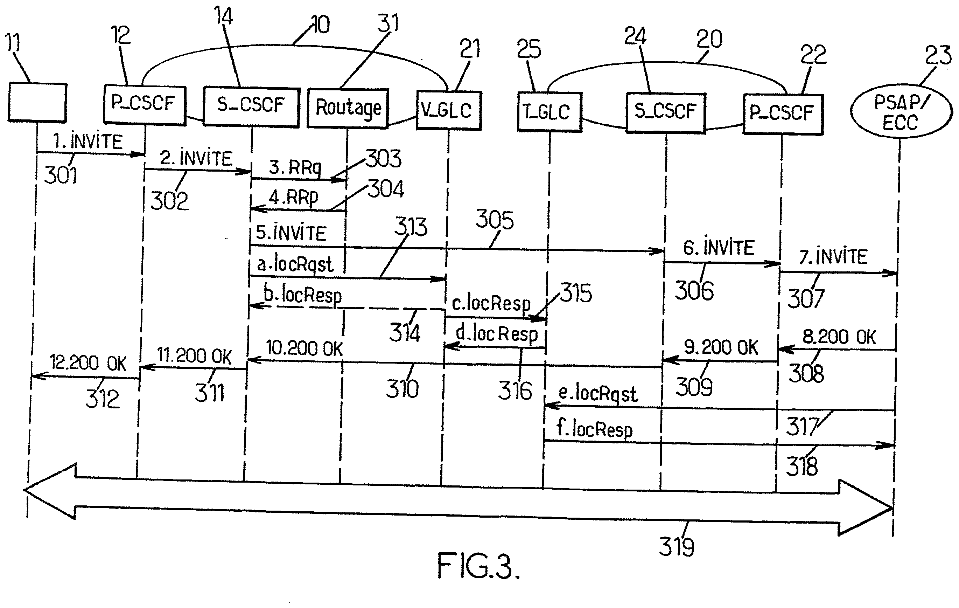

La figure 3 illustre un échange de messages pour le traitement d'un appel d'urgence dans un système de télécommunications selon un example. Ce système est similaire à celui qui est décrit ci-dessus en référence à la figure 2.

Un terminal 11 initie un appel d'urgence dans le réseau IMS 10, en émettant un message d'initiation d'appel 301 'INVITE' selon le protocole SIP à destination de l'entité P-CSCF 12 du premier sous-système.

L'entité P-CSCF 12 transmet le message 'INVITE' 301 sous la forme d'un message 'INVITE' 302 à l'entité de réseau S-CSCF 14. Cette dernière est adaptée pour router le message selon une fonction de routage déterminée vers le centre d'appels 23.

En général, dans le réseau IMS 10 auquel se connecte le terminal 11, lorsqu'un appel urgent est traité, un contexte de communication PDP spécifique aux appels d'urgence est créé de sorte notamment à gérer la priorité des messages échangés au cours de cet appel. Un tel contexte d'urgence est géré au niveau de l'entité S-CSCF 14.

On peut également prévoir avantageusement qu'un élément S-CSCF dédié au traitement des appels d'urgence puisse être mis en œuvre et ainsi éviter des interférences entre appels qui ne nécessitent pas un traitement à caractère urgent et les autres appels.

Dans des services de localisation autres que ceux liés aux services d'urgence, un accord de l'utilisateur est requis avant de fournir une information relative à sa localisation. En revanche, pour une localisation de l'utilisateur aux fins de traiter un appel d'urgence, généralement, aucun contrôle des droits de l'utilisateur n'est mis en œuvre de sorte à accélérer la prise en charge de l'appelant.

En général, en outre, lors d'un tel appel effectué par un terminal mobile ayant une carte de type carte SIM, pour 'Subscriber Identity Module', aucune vérification relative à cette carte n'est mise en œuvre contrairement au cas des appels classiques.

Cet example couvre toutes les implémentations possibles de la fonction de routage mise en œuvre au niveau de l'entité S-CSCF 14 pour router l'appel d'urgence. Ainsi, cette fonction de routage peut être implémentée par exemple directement sur l'entité S-CSCF 14, ou encore sur une autre entité du réseau IMS 10. Elle peut par exemple être implémentée sur une entité de routage spécifique. Elle peut aussi être localisée sur un serveur de localisation, ou encore sur une entité de réseau P-CSCF.

Cette fonction de routage peut être adaptée pour gérer le routage des appels d'urgence reçus dans le réseau IMS 10 exclusivement. Dans ce cas, cette fonction de routage est dédiée au réseau IMS 10, ou premier sous-système de télécommunications. Cette fonction peut aussi être adaptée pour gérer le routage des appels d'urgence reçus à la fois dans les réseaux IMS 10 et 20. De manière plus générale, cette fonction de routage peut être une fonction globale, commune aux deux sous-systèmes de télécommunications du système.

Une telle table de routage peut être gérée par le S-CSCF. Il est également possible de prévoir que cette table de routage soit gérée par n'importe quel équipement du réseau.

On note que la présente invention peut être aisément appliquée à un système de télécommunications comprenant plus de deux sous-systèmes de télécommunications. Dans ce cas, avantageusement, la fonction de routage peut être commune à tous les sous-systèmes de télécommunications du système considéré, c'est-à-dire à un ensemble de réseaux de télécommunication sur lesquels les appels d'urgence peuvent être transmis.

Dans un example, le système de télécommunications comprend une pluralité de centres d'appels d'urgence. La fonction de routage peut alors avantageusement être adaptée pour gérer une liste de centre d'appels d'urgence et pour sélectionner un des centres d'appels d'urgence en fonction d'une information d'aide au routage reçue depuis le terminal appelant.

Ainsi, une telle fonction de routage peut notamment prendre en compte une indication de localisation approximative du terminal appelant qui est incluse dans le message d'initiation d'appel à router. Par conséquent, la fonction de routage peut sélectionner le centre d'appels d'urgence le plus proche du terminal ou, tout au moins, depuis lequel le terminal appelant est le plus accessible. Une indication de localisation approximative comprise dans le message d'initiation d'appel peut correspondre par exemple à un identifiant de la cellule dans laquelle est situé le terminal, ou cellld, ou plus généralement, une information relative au réseau d'accès, telle qu'un type d'accès comme par exemple un accès de type IEEE 802.11a, ou encore de type 3GPP UTRAN FDD, accompagnée d'une information sur l'accès comme par exemple un identifiant de la cellule dans un accès de type 3GPP UTRAN.

On peut alors prévoir de prendre en compte des critères qui permettent d'évaluer le temps de parcours entre le centre d'appels et l'appelant tels que par exemple des informations de trafic routier. On peut également prévoir de prendre en considération des informations relatives à la disponibilité d'une pluralité de centres d'appels proches de l'appelant.

La présente invention ne présente aucune limitation quant au mécanisme de sélection du centre d'appels au niveau de l'entité de gestion de la table de routage.

En sélectionnant un centre d'appels d'urgence et en routant ainsi, le traitement de l'appel d'urgence peut être réalisé de manière efficace, puisque la fonction de routage est en mesure sur la base de cette indication reçue dans le message d'initiation d'appel de faire une sélection pertinente du centre d'appels vers lequel diriger l'appel d'urgence. En outre, un tel routage peut être réalisé rapidement, puisque la fonction de routage n'attend pas qu'une étape de localisation soit effectuée avant de router l'appel d'urgence. Ainsi, aucun délai significatif n'est introduit dans un tel routage d'appel. Or, la rapidité de traitement d'appel est une caractéristique très importante dans un système de télécommunications offrant un service d'urgence.

Dans l'example illustré en figure 3 la fonction de routage est implémentée dans une entité de routage 31.

Ainsi, l'entité S-CSCF 14, sur réception du message d'initiation d'appel 302, requiert auprès de la fonction de routage 31 les informations utiles pour le routage de ce message 302. A cet effet, elle émet à destination de la fonction de routage un message 303 'Routing Request' et reçoit depuis cette fonction de routage un message 304 'Routing Response'. Sur réception de ce dernier message, l'entité S-CSCF 14 est en mesure de router le message d'initiation d'appel d'urgence vers l'entité S-CSCF 24 du second sous-système de télécommunications, c'est-à-dire le réseau IMS 20, sous la forme d'un message 305 'INVITE' selon le protocole SIP.

L'entité S-CSCF 24 transmet ce message à l'entité P-CSCF 22 sous la forme d'un message 'INVITE' 306 selon le protocole SIP. Cette dernière entité 22 transmet enfin ce message d'initiation d'appel d'urgence à destination du centre d'appels 23, sous la forme d'un message 'INVITE' 307 selon le protocole SIP.

Puis, l'appel d'urgence est établi 319 entre le centre d'appels 23 et le terminal 11, suite à l'émission par le centre d'appels d'urgence 23 d'un message '200 OK' selon le protocole SIP, sous la forme d'un message 308 à destination de l'entité P-CSCF 22, puis sous la forme d'un message 309 depuis cette dernière entité vers l'entité S-CSCF 24, puis sous la forme d'un message 310 vers l'entité S-CSCF 14, puis sous la forme d'un message 311 vers l'entité P-CSCF 12 et enfin sous la forme d'un message 312 depuis cette dernière entité vers le terminal 11.

L'appel d'urgence est ainsi établi avantageusement sans attendre qu'une quelconque étape de localisation précise de l'appelant ait été réalisée. En outre, en procédant par un routage sur la base d'une indication de localisation approximative, lorsque l'appel peut être routé vers une pluralité de centre d'appels d'urgence, on est en mesure de sélectionner le centre d'appels le plus approprié au traitement de l'appel initié en fonction de l'accessibilité de l'appelant par rapport au centre qui va traiter cet appel d'urgence.

Puis, de manière parallèle au routage de l'appel d'urgence au niveau de l'entité S-CSCF 14, une étape de localisation de l'appelant est déclenchée. En effet, sur réception du message d'initiation de l'appel d'urgence 302, l'entité S-CSCF 14 non seulement lance une procédure de routage de ce message vers un centre d'appels d'urgence, comme décrite ci-avant, mais elle lance également une procédure de localisation de l'appelant en émettant un message 313 'locRqst' selon par exemple un protocole du type MLP, pour 'Mobile Location Protocol' à destination du serveur de localisation 21 qui est associé au réseau IMS 10.

Dans un example, ce message de requête de localisation indique un identifiant du terminal appelant, ainsi qu'une adresse du serveur de localisation associé au réseau IMS 20 auquel est relié le centre d'appels d'urgence 23 vers lequel l'appel d'urgence est routé. Un tel identifiant peut être, par exemple, un numéro d'appel du terminal. Cet example couvre toute méthode permettant à l'entité S-CSCF 14 de récupérer l'adresse du serveur de localisation associé au réseau IMS 20. On peut par exemple prévoir qu'une telle adresse est disponible depuis la fonction de routage ou encore à partir de tout autre base de données permettant d'associer une adresse de serveur de localisation et le centre d'appels sélectionné.

De préférence, le serveur de localisation 21 répond à l'entité S-CSCF 14 par un message d'accusé de réception 314 'locResp'.

Dans un mode de réalisation de la présente invention, le serveur de localisation 21 détermine une information de localisation du terminal 11.

Aucune limitation n'est attachée au mécanisme de localisation mis en œuvre par un tel serveur de localisation. L'homme du métier connaît de nombreux mécanismes permettant de déterminer une localisation précise d'un appelant.

Puis, une fois qu'une information de localisation est obtenue, le serveur de localisation 21 transmet cette information au serveur de localisation 25 associé au réseau IMS 20 correspondant au centre d'appels vers lequel l'appel d'urgence est routé, c'est-à-dire le second sous-système de télécommunications. A cet effet, un message 315 'locResp' indiquant cette information de localisation est émis depuis le serveur de localisation 21 à destination du serveur de localisation 25. De préférence, un message accusant réception 316 'locResp' de ce dernier message est transmis en réponse au serveur de localisation 21.

L'étape de localisation d'un appelant dans un système de télécommunications selon un example est donc de préférence réalisée par le serveur de localisation associé au réseau IMS auquel est connecté l'appelant, puis l'information de localisation est transmise au serveur de localisation associé au réseau IMS auquel est relié le centre d'appels ayant en charge de traiter l'appel d'urgence.

La présente invention couvre tous les types d'architectures dans lesquelles le centre d'appels d'urgence et le terminal sont connectés à des sous systèmes différents. Ainsi, les mêmes mécanismes de traitement d'appels d'urgence que ceux énoncés ci-dessus s'appliquent dans une architecture comprenant un ou plusieurs autres sous-systèmes, ou autres réseaux IMS, entre le réseau IMS 10 et le réseau IMS 20.

Puis, une fois que l'appel d'urgence est établi entre le terminal 11 et le centre d'appels d'urgence 23, le centre d'appels peut décider de requérir une localisation précise de l'appelant, en fonction de certaines caractéristiques de l'appel, notamment en fonction du type d'aide à fournir à l'appelant. Dans un tel contexte, le centre d'appels d'urgence transmet alors un message 317 'locRsqt' à destination du serveur de localisation 25 associé au sous-système auquel est relié le centre d'appels d'urgence 23, afin de requérir l'information de localisation relative à l'appelant. En réponse à ce dernier message, le serveur 25 envoie au centre d'appels d'urgence 23 un message 318 'locResp' comprenant l'information de localisation, préalablement reçue par le serveur de localisation 25 depuis le serveur de localisation 21 associé au premier sous-système 10.

A l'issue de toutes ces étapes, d'une part un appel d'urgence est établi entre le terminal 11 et le centre d'appels d'urgence 23, et d'autre part ce dernier bénéficie d'une information de localisation précise de l'appelant de sorte à fournir de l'aide efficacement.

Dans le cas où le serveur de localisation 23 n'est pas en mesure de localiser le terminal 11, aucune information de localisation relative au terminal n'est émise à destination du serveur de localisation 25. Dans ce contexte, lorsque le centre d'appels requiert auprès du serveur de localisation 25 une information de localisation relative au terminal 11, ce serveur de localisation 25 détermine cette information de localisation avant de la transmettre en réponse au centre d'appels d'urgence 23. Mais, un délai supplémentaire est alors introduit, ce qui peut avoir des conséquences importantes dans le traitement de l'appel en fonction du caractère d'urgence de ce dernier.

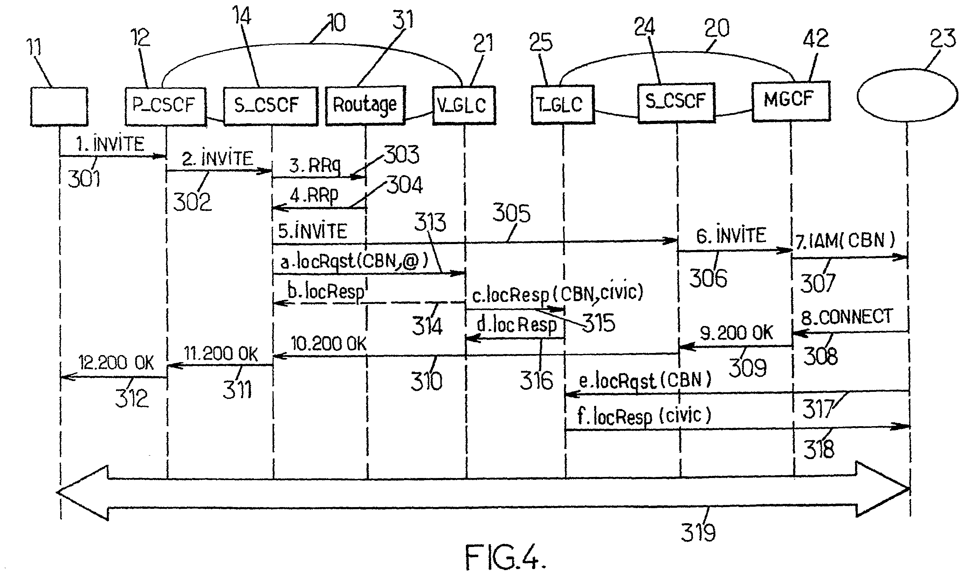

La figure 4 illustre un échange de messages pour le traitement d'un appel d'urgence dans un système de télécommunications selon un deuxième example dans lequel le centre d'appels d'urgence vers lequel un appel est routé est relié de manière indirecte au second sous-système de télécommunications via une passerelle 42. Ce cas couvre une architecture dans laquelle le protocole utilisé dans le second sous-système de télécommunications n'est pas compatible avec le réseau auquel appartient le centre d'appels d'urgence 23.

Tel est le cas lorsque le centre d'appels 23 est relié au second sous-système via un réseau PSTN.

Dans un example, une telle passerelle correspond à une entité MGCF, pour 'Media Gateway Control Function', telle que définie pour l'IMS.

Dans ce contexte, une telle passerelle 42 est adaptée pour opérer une conversion de protocole entre le protocole utilisé dans le second sous-système de télécommunications et le centre d'appels d'urgence 23. En l'espèce, cette passerelle 42 est apte à convertir les messages reçus selon le protocole SIP en messages selon un protocole de type ISUP, pour 'ISDN User Part'.

L'échange de messages selon un mode de réalisation de l'invention est très similaire à celui décrit en référence à la figure 3, à l'exception de la partie des messages échangés décrite ci-après.

Le message d'initiation d'appel 306 'INVITE' selon le protocole SIP émis par l'entité S-CSCF 24 dans le second sous-système 20 est reçu par la passerelle 42. Cette dernière convertit ce message selon le protocole SIP en un message 307 'IAM' selon le protocole ISUP et le transmet vers le centre d'appels d'urgence.

Ce dernier répond au message 307 par un message 'CONNECT' 308 selon le protocole ISUP transmis à destination de la passerelle 42.

Cette dernière convertit alors ce dernier message 308 en un message 309 '200 OK' selon le protocole SIP, qui est envoyé à destination de l'entité S-CSCF 24. Puis, ce message est transmis à l'entité S-CSCF 14 sous la forme d'un message 310 '200 OK', puis un message 311 vers l'entité P-CSCF 12 et un message 312 vers le terminal 11.

L'étape de localisation est similaire à celle décrite en référence à la figure 3 et n'est de ce fait pas décrite à nouveau.

A l'issue de cet échange, l'appel 319 est établi entre le terminal 11 et le centre d'appels 23 qui est relié au second sous-système 20 par un réseau PSTN.

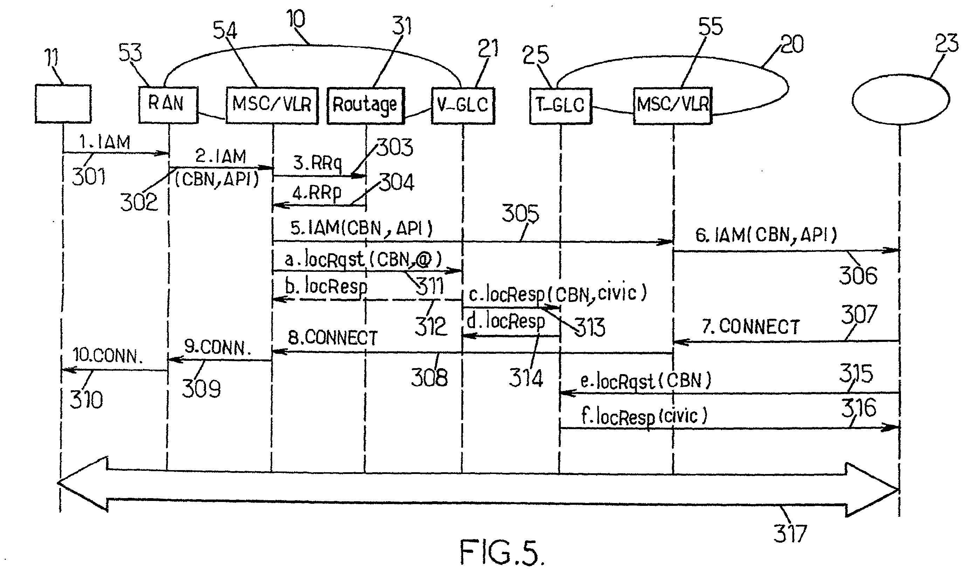

La présente invention trouve également des applications dans n'importe quel système comprenant un sous-système correspondant à un réseau mobile cellulaire. La figure 5 illustre un échange de messages pour le traitement d'un appel d'urgence dans un tel système de télécommunications.

Dans cet example, le premier sous-système de télécommunications correspond à un réseau mobile cellulaire de type UMTS, pour 'Universal Mobile Telecommunications System', comprenant une entité réseau RAN, pour 'Radio Access Network', en charge de gérer l'accès des terminaux et une entité MSC, pour 'Mobile Switching Center', en charge de contrôler et commuter les appels. Une fonction de routage 31, similaire à celle décrite en référence à la figure 3 ci-avant, est associée à ce premier sous-système de télécommunications.

Le terminal 11 initie un appel d'urgence en émettant un message 301 'IAM' selon le protocole ISUP à destination de l'entité RAN 53. Ce message est transmis à l'entité MSC 54. Puis, cette dernière est adaptée pour router cet appel selon la fonction de routage 31. Les mêmes caractéristiques relatives à la fonction de routage que celles décrites ci-avant s'appliquent dans ce contexte d'appel également.

Puis, l'entité MSC 54 obtient depuis la fonction de routage 31 des informations lui permettant de router cet appel vers le centre d'appels d'urgence 23. Ainsi, le message 302 est transmis au MSC 55 du second sous-système de télécommunications 20, sous la forme d'un message 305 'IAM' selon le protocole ISUP.

Puis, l'entité MSC 55 transmet ce message sous la forme d'un message 306 'IAM au centre d'appels d'urgence 23. Ce dernier répond par l'émission d'un message 307 'CONNECT' selon le protocole ISUP, à destination du MSC 55. Ce dernier transmet ce message au MSC 54 sous la forme d'un message 308 'CONNECT'. Puis, le MSC 54 transmet ce message sous la forme d'un message 309 'CONNECT', qui transmet enfin ce dernier message sous la forme d'un message 310 'CONNECT' selon le protocole ISUP au terminal 11.

Parallèlement au traitement de routage de l'appel d'urgence tel que décrit ci-dessus, l'entité MSC 54 requiert, auprès d'une fonction de localisation 21 associée au premier sous-système de télécommunications, une procédure de localisation du terminal 11 en émettant un message 311 'locRqst' à destination du serveur de localisation 21. De préférence, ce dernier lui répond en accusant réception de cette requête par l'émission d'un message 312 'locRsp'.

Le serveur de localisation met en œuvre une procédure de localisation du terminal 11, à l'issue de laquelle il obtient une information de localisation de l'appelant. Cette dernière est alors transmise depuis ce serveur de localisation 21 à destination du serveur de localisation 25 associé au second sous-système de télécommunications par l'émission d'un message 313 'location Report'. Puis, le serveur de localisation associé au second sous-système 20 accuse réception de cette information en émettant un message 314 'locRsp'.

Ensuite, comme décrit précédemment, le centre d'appels d'urgence 23 peut recevoir l'information de localisation depuis le serveur de localisation 25, soit automatiquement, soit sur requête.

Il convient de noter que le premier sous-système peut correspondre au réseau auquel le terminal est abonné ou encore à tout autre réseau visité par le terminal lors de son itinérance, ou 'roaming'.

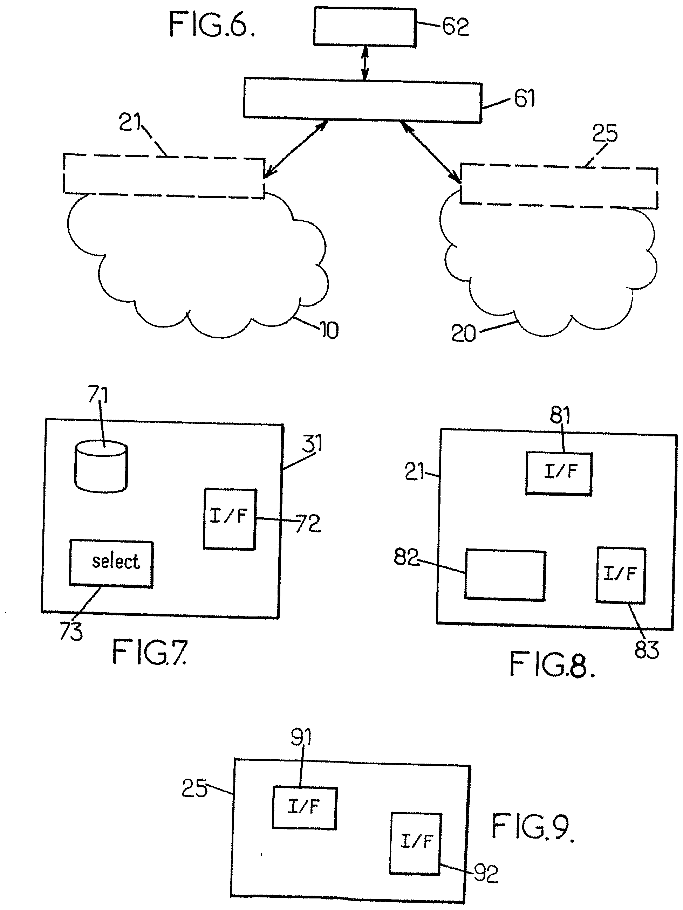

La figure 6 illustre une variante d'architecture de réseau relative à la mise en œuvre d'une étape de localisation selon un mode de réalisation de la présente invention. Dans une telle architecture, un serveur de localisation global, ou une fonction de localisation globale 61, au système de télécommunications selon un mode de réalisation de la présente invention est adapté pour recevoir une information de localisation du terminal 11 depuis un serveur de localisation associé à un des sous-systèmes de télécommunications selon un mode de réalisation de la présente invention.

Ainsi, dans un mode de réalisation de la présente invention, on peut prévoir que le serveur de localisation 21 transmet l'information de localisation au serveur de localisation global. Ce dernier est alors en mesure de fournir une telle information de localisation au centre d'appels en charge de l'appel d'urgence du terminal 11. Ainsi, une architecture hiérarchisée permet de centraliser les informations de localisation des appelants relatives au service d'urgence au niveau du serveur de localisation global.

Lorsque, dans une telle architecture, plusieurs centres d'appels d'urgence sont susceptibles de prendre en charge l'appel d'urgence du terminal 11, on peut prévoir que tous les centres d'appels d'urgence du système de télécommunications considéré ont accès à ce serveur.

La fonction de localisation globale 61 peut fournir à différentes applications 62 des informations de localisations obtenues depuis les serveurs de localisation des différents sous-systèmes. En effet, d'autres services de télécommunications, autre qu'un service d'appels d'urgence peut se baser avantageusement sur des informations de localisation centralisées au niveau de la fonction de localisation globale.

En se référant aux modes de réalisation décrits ci-avant en référence aux figures 3-5, le serveur de localisation 25 associé au second sous-système de télécommunications 20 peut être aisément remplacé par un serveur de localisation global 61 qui reçoit les messages depuis le serveur de localisation associé au premier sous-système de télécommunications 10 comme le serveur de localisation 25 et qui est adapté pour fournir, le cas échéant, sur requête ou spontanément, une information de localisation au centre d'appels 23.

La figure 7 illustre un dispositif de routage 31 d'un appel. Il comprend une base de données 71 qui est adaptée pour gérer une association entre l'information d'aide au routage reçue dans le message d'initiation de l'appel d'urgence et le centre d'appels. Il comprend également une unité d'interface 72 adaptée d'une part pour recevoir un message de requête d'informations de routage d'un appel d'urgence et d'autre part pour transmettre un message d'informations de routage indiquant le centre d'appels vers lequel router l'appel d'urgence.

Il peut en outre comprendre, lorsque le système de télécommunications comprend une pluralité de centre d'appels, une unité de sélection 73 adaptée pour sélectionner, en fonction d'une information d'aide au routage, un centre d'appels 23 pour router l'appel d'urgence. Par ailleurs, ce dispositif de routage peut être mutualisé pour un ensemble de sous-systèmes de télécommunications. Par exemple, le dispositif de routage pour les réseaux de type PSTN peut être réalisé par le dispositif qui prend en charge des réseaux de type UMTS.

La figure 8 illustre le serveur de localisation 21. Ce serveur de localisation comprend une première unité d'interface 81 adaptée pour recevoir, depuis le premier sous-système de télécommunications 10, un message de requête de localisation d'un terminal. Ce message de requête indique un identifiant du terminal et, le cas échéant, un autre serveur de localisation adapté pour coopérer avec le centre d'appels. Il comprend en outre une unité de détermination 82 d'une information de localisation d'un terminal en fonction d'un identifiant du terminal. Il comprend aussi une seconde unité d'interface 83 adaptée pour transmettre l'information de localisation à un autre serveur de localisation, le cas échéant.

La figure 9 illustre un serveur de localisation global. Le serveur de localisation global comprend une première unité d'interface 91 adaptée pour recevoir, depuis un serveur de localisation 21 d'un sous-système de télécommunications 10, une information de localisation d'un terminal dans ledit sous-système de télécommunications. Il comprend aussi une seconde unité d'interface 92 adaptée pour transmettre l'information de localisation au centre d'appels.

## Revendications

1. Procédé de gestion d'un appel d'un terminal (11) dans un système de télécommunications offrant un service de routage et de localisation de l'appel ; ledit système de télécommunications comprenant d'une part un centre d'appels (23) et d'autre part au moins un premier et un second sous-système de télécommunications reliés entre eux (10, 20) ;
une première fonction de localisation (21) étant associée au premier sous- système de télécommunications et une seconde fonction de localisation (25), distincte de la première fonction de localisation, étant adaptée pour coopérer avec le centre d'appels ;
ledit centre d'appels étant relié au second sous-système de télécommunications ; ledit procédé comprenant les étapes suivantes :
/a/ au niveau du premier sous-système :
- router un message d'initiation d'appel (301), reçu depuis ledit terminal, vers le centre d'appel, via le second sous-système de télécommunications ; et
- fournir (313) à la première fonction de localisation un identifiant du terminal inclus dans le message d'initiation d'appel ;
/b/ au niveau de la première fonction de localisation, déterminer une information de localisation du terminal associée à l'identifiant du terminal fourni par le premier sous-système, puis transmettre l'information de localisation à la seconde fonction de localisation, dans lequel la seconde fonction de localisation (25) est une fonction de localisation globale (61); et dans lequel le centre d'appels requiert l'information de localisation auprès de cette fonction globale de localisation,
dans lequel, lorsque le système de télécommunications comprend une pluralité de centre d'appels, une fonction de routage (31) est adaptée pour sélectionner, en fonction d'une information d'aide au routage reçue depuis le terminal, un centre d'appels (23) pour router le message d'initiation d'appel, et
dans lequel l'information d'aide au routage correspond à une information relative au type d'accès réseau, qui est indiquée dans le message d'initiation d'appel, dans lequel la seconde fonction de localisation (25) est associée au second sous-système (20); et dans lequel la seconde fonction de localisation est déterminée en fonction du centre d'appels.

2. Procédé de gestion d'un appel selon la revendication 1 , comprenant en outre l'étape suivante :
/c/ au niveau du centre d'appel,
- recevoir l'information de localisation du terminal depuis la seconde fonction de localisation (317, 318).

3. Procédé de gestion d'un appel selon la revendication 1, dans lequel la fonction de routage est commune aux sous-systèmes de télécommunications (10, 20).

4. Dispositif de routage (31) d'un appel dans un système de télécommunications offrant un service de routage et de localisation de l'appel ; ledit système de télécommunications comprenant d'une part au moins un centre d'appels (23) et d'autre part au moins un premier et un second sous- système de télécommunications reliés entre eux (10, 20) ; ledit centre d'appels étant relié au second sous-système ; ledit dispositif de routage comprenant : une base de données (71) comprenant une association entre une information d'aide au routage et le centre d'appels ; et une unité d'interface (72) adaptée d'une part pour recevoir un message (303) de requête d'informations de routage d'un appel, ledit message de requête comprenant l'information d'aide au routage , et d'autre part pour transmettre un message (304) d'informations de routage indiquant le centre d'appels vers lequel router l'appel, comprenant en outre, lorsque le système de télécommunications comprend une pluralité de centre d'appels, chacun étant adapté pour coopérer avec un serveur de localisation, une unité de sélection (73) adaptée pour sélectionner, en fonction d'une information d'aide au routage reçue dans le message (303) de requête, d'une part un centre d'appels (23) pour router l'appel et d'autre part ledit serveur de localisation avec lequel ledit centre d'appels sélectionné est adapté pour coopérer, et
dans lequel l'information d'aide au routage correspond à une information relative au type d'accès réseau, qui est indiquée dans le message d'initiation d'appel, dans lequel la seconde fonction de localisation (25) est associée au second sous-système (20); et dans lequel la seconde fonction de localisation est déterminée en fonction du centre d'appels.

5. Système de télécommunications offrant un service de routage et de localisation d'un appel et comprenant :
- un centre d'appels (23);
- au moins un premier et un second sous-système de télécommunications reliés entre eux (10, 20);
- un premier serveur de localisation (21), ledit serveur de localisation étant associé au premier sous-système de localisation (10) et comprenant : une première unité d'interface (81) adaptée pour recevoir, depuis le premier sous-système de télécommunications (10), un message (313) de requête de localisation d'un terminal, ledit message de requête indiquant un identifiant du terminal et un second serveur de localisation (25); une unité de détermination (82) d'une information de localisation d'un terminal en fonction d'un identifiant du terminal ; adapté pour déterminer une information de localisation d'un terminal dans le premier sous-système de télécommunications; et une seconde unité d'interface (83) adaptée pour transmettre ladite information de localisation audit second serveur de localisation (25), et
- le second serveur de localisation (25) distinct du premier serveur de localisation, adapté pour coopérer avec le centre d'appels, et comportant une première unité d'interface (91) adaptée pour recevoir l'information de localisation du terminal dans le premier sous-système de télécommunications (10) depuis le premier serveur de localisation et une seconde unité d'interface (92) adaptée pour transmettre ladite information de localisation au centre d'appels, ledit second serveur de localisation (25) étant un serveur global, le centre d'appel étant configuré pour requérir l'information de localisation auprès du second serveur de localisation (25),
le système de télécommunication comprenant en outre un dispositif de routage selon la revendication 4,
dans lequel l'information d'aide au routage correspond à une information relative au type d'accès réseau, qui est indiquée dans le message d'initiation d'appel, ledit système étant configuré pour mettre en œuvre le procédé selon la revendication 1.

6. Programme d'ordinateur destiné à être installé dans un système selon la revendication 5, comprenant des instructions aptes à mettre en œuvre un procédé selon l'une quelconque des revendications 1 à 3, lors d'une exécution du programme par des moyens de traitement du système selon la revendication 5.

## Patentansprüche

1. Verfahren zur Verwaltung eines Anrufs eines Endgerätes (11) in einem Telekommunikationssystem, das einen Dienst zum Routing und zur Ortung des Anrufs bietet; wobei das Telekommunikationssystem einerseits ein Callcenter (23) und andererseits wenigstens ein erstes und ein zweites Telekommunikationsteilsystem (10, 20), die miteinander verbunden sind, umfasst;
wobei eine erste Ortungsfunktion (21) dem ersten Telekommunikationsteilsystem zugeordnet ist und eine zweite Ortungsfunktion (25), die von der ersten Ortungsfunktion verschieden ist, dafür eingerichtet ist, mit dem Callcenter zusammenzuwirken;
wobei das Callcenter mit dem zweiten Telekommunikationsteilsystem verbunden ist;
wobei das Verfahren die folgenden Schritte umfasst:
/a/ auf der Ebene des ersten Teilsystems:
- Routen einer Anrufeinleitungsnachricht (301), die von dem Endgerät kommend empfangen wurde, zu dem Callcenter über das zweite Telekommunikationsteilsystem; und
- Liefern (313) einer Kennung des Endgerätes, die in der Anrufeinleitungsnachricht enthalten ist, an die erste Ortungsfunktion;
/b/ auf der Ebene der ersten Ortungsfunktion, Bestimmen einer Ortungsinformation des Endgerätes, die der von dem ersten Teilsystem gelieferten Kennung des Endgerätes zugeordnet ist, danach Übertragen der Ortungsinformation an die zweite Ortungsfunktion, wobei die zweite Ortungsfunktion (25) eine globale Ortungsfunktion (61) ist; und wobei das Callcenter die Ortungsinformation von dieser globalen Ortungsfunktion anfordert,
wobei, wenn das Telekommunikationssystem mehrere Callcenter umfasst, eine Routingfunktion (31) dafür eingerichtet ist, in Abhängigkeit von einer Routinghilfeinformation, die von dem Endgerät kommend empfangen wurde, ein Callcenter (23) auszuwählen, um die Anrufeinleitungsnachricht zu routen, und
wobei die Routinghilfeinformation einer auf den Netzzugangstyp bezogenen Information entspricht, welche in der Anrufeinleitungsnachricht angegeben ist, wobei die zweite Ortungsfunktion (25) dem zweiten Teilsystem (20) zugeordnet ist; und wobei die zweite Ortungsfunktion in Abhängigkeit von dem Callcenter bestimmt wird.

2. Verfahren zur Verwaltung eines Anrufs nach Anspruch 1, welches außerdem den folgenden Schritt umfasst:
/c/ auf der Ebene des Callcenters:
- Empfangen der Ortungsinformation des Endgerätes von der zweiten Ortungsfunktion (317, 318) .

3. Verfahren zur Verwaltung eines Anrufs nach Anspruch 1, wobei die Routingfunktion den Telekommunikationsteilsystemen (10, 20) gemeinsam ist.

4. Vorrichtung zum Routing (31) eines Anrufs in einem Telekommunikationssystem, das einen Dienst zum Routing und zur Ortung des Anrufs bietet; wobei das Telekommunikationssystem einerseits wenigstens ein Callcenter (23) und andererseits wenigstens ein erstes und ein zweites Telekommunikationsteilsystem (10, 20), die miteinander verbunden sind, umfasst; wobei das Callcenter mit dem zweiten Teilsystem verbunden ist; wobei die Routingvorrichtung umfasst: eine Datenbank (71), die eine Zuordnung zwischen einer Routinghilfeinformation und dem Callcenter umfasst; und eine Schnittstelleneinheit (72), die dafür eingerichtet ist, einerseits eine Nachricht (303) zur Anforderung von Routinginformationen eines Anrufs zu empfangen, wobei diese Anforderungsnachricht die Routinghilfeinformation umfasst, und andererseits eine Nachricht (304) mit Routinginformationen zu übertragen, die das Callcenter angibt, zu dem der Anruf zu routen ist; und außerdem, wenn das Telekommunikationssystem mehrere Callcenter umfasst, die jeweils dafür eingerichtet sind, mit einem Ortungsserver zusammenzuwirken, eine Auswahleinheit (73) umfasst, die dafür eingerichtet ist, in Abhängigkeit von einer Routinghilfeinformation, die in der Anforderungsnachricht (303) empfangen wurde, einerseits ein Callcenter (23) zum Routen des Anrufs und andererseits den Ortungsserver, zum Zusammenwirken mit dem das ausgewählte Callcenter eingerichtet ist, auszuwählen, und
wobei die Routinghilfeinformation einer auf den Netzzugangstyp bezogenen Information entspricht, welche in der Anrufeinleitungsnachricht angegeben ist, wobei die zweite Ortungsfunktion (25) dem zweiten Teilsystem (20) zugeordnet ist; und wobei die zweite Ortungsfunktion in Abhängigkeit von dem Callcenter bestimmt wird.

5. Telekommunikationssystem, welches einen Dienst zum Routing und zur Ortung eines Anrufs bietet und umfasst:
- ein Callcenter (23);
- wenigstens ein erstes und ein zweites Telekommunikationsteilsystem (10, 20), die miteinander verbunden sind;
- einen ersten Ortungsserver (21), wobei der Ortungsserver dem ersten Ortungsteilsystem (10) zugeordnet ist und umfasst: eine erste Schnittstelleneinheit (81), die dafür eingerichtet ist, von dem ersten Telekommunikationsteilsystem (10) eine Nachricht (313) zur Anforderung der Ortung eines Endgerätes zu empfangen, wobei diese Anforderungsnachricht eine Kennung des Endgerätes und einen zweiten Ortungsserver (25) angibt; eine Einheit zur Bestimmung (82) einer Ortungsinformation eines Endgerätes in Abhängigkeit von einer Kennung des Endgerätes, die dafür eingerichtet ist, eine Ortungsinformation eines Endgerätes in dem ersten Telekommunikationsteilsystem zu bestimmen; und eine zweite Schnittstelleneinheit (83), die dafür eingerichtet ist, die Ortungsinformation an den zweiten Ortungsserver (25) zu übertragen, und
- den zweiten Ortungsserver (25), der von dem ersten Ortungsserver verschieden ist, dafür eingerichtet ist, mit dem Callcenter zusammenzuwirken, und eine erste Schnittstelleneinheit (91), die dafür eingerichtet ist, die Ortungsinformation des Endgerätes in dem ersten Telekommunikationsteilsystem (10) von dem ersten Ortungsserver zu empfangen, und eine zweite Schnittstelleneinheit (92), die dafür eingerichtet ist, die Ortungsinformation an das Callcenter zu übertragen, aufweist, wobei der zweite Ortungsserver (25) ein globaler Server ist, wobei das Callcenter dafür ausgelegt ist, die Ortungsinformation von dem zweiten Ortungsserver (25) anzufordern,
wobei das Telekommunikationssystem außerdem eine Vorrichtung zum Routing nach Anspruch 4 umfasst, wobei die Routinghilfeinformation einer auf den Netzzugangstyp bezogenen Information entspricht, welche in der Anrufeinleitungsnachricht angegeben ist, wobei das System dafür ausgelegt ist, das Verfahren nach Anspruch 1 durchzuführen.

6. Computerprogramm, welches dazu bestimmt ist, in einem System nach Anspruch 5 installiert zu werden, und Informationen umfasst, die geeignet sind, bei einer Ausführung des Programms durch Verarbeitungsmittel des Systems nach Anspruch 5 ein Verfahren nach einem der Ansprüche 1 bis 3 durchzuführen.

## Claims

1. Method for managing a call of a terminal (11) in a telecommunications system offering a call routing and location service; said telecommunications system comprising firstly a call centre (23) and secondly at least one first and one second telecommunications subsystem that are connected to one another (10, 20);
a first location function (21) being associated with the first telecommunications subsystem and a second location function (25), different from the first location function, being adapted to cooperate with the call centre;
said call centre being connected to the second telecommunications subsystem;
said method comprising the following steps:
/a/ in the first subsystem:
- routing a call initiation message (301), received from said terminal, to the call centre, via the second telecommunications subsystem; and
- providing (313) the first location function with an identifier of the terminal included in the call initiation message;
/b/ in the first location function, determining location information of the terminal, associated with the identifier of the terminal provided by the first subsystem, and then transmitting the location information to the second location function, wherein the second location function (25) is a global location function (61); and wherein the call centre requests the location information from this global location function,
wherein, when the telecommunications system comprises a plurality of call centres, a routing function (31) is adapted to select, on the basis of routing assistance information received from the terminal, a call centre (23) for routing the call initiation message, and
wherein the routing assistance information corresponds to information relating to the type of network access, which is indicated in the call initiation message, wherein the second location function (25) is associated with the second subsystem (20); and wherein the second location function is determined on the basis of the call centre.

2. Method for managing a call according to Claim 1, furthermore comprising the following step:
/c/ at the call centre,
- receiving the location information of the terminal from the second location function (317, 318).

3. Method for managing a call according to Claim 1, wherein the routing function is common to the telecommunications subsystems (10, 20).

4. Routing device (31) for routing a call in a telecommunications system offering a call routing and location service; said telecommunications system comprising firstly at least one call centre (23) and secondly at least one first and one second telecommunications subsystem that are connected to one another (10, 20); said call centre being connected to the second subsystem; said routing device comprising: a database (71) comprising an association between routing assistance information and the call centre; and an interface unit (72) adapted firstly to receive a call routing information request message (303), said request message comprising the routing assistance information, and secondly to transmit a routing information message (304) indicating the call centre to which the call should be routed, furthermore comprising, when the telecommunications system comprises a plurality of call centres, each one being adapted to cooperate with a location server, a selection unit (73) adapted to select, on the basis of routing assistance information received in the request message (303), firstly a call centre (23) for routing the call and secondly said location server with which said selected call centre is adapted to cooperate, and
wherein the routing assistance information corresponds to information relating to the type of network access, which is indicated in the call initiation message, wherein the second location function (25) is associated with the second subsystem (20); and wherein the second location function is determined on the basis of the call centre.

5. Telecommunications system offering a call routing and location service and comprising:
- a call centre (23);
- at least one first and one second telecommunications subsystem that are connected to one another (10, 20);
- a first location server (21), said location server being associated with the first location subsystem (10) and comprising: a first interface unit (81) adapted to receive, from the first telecommunications subsystem (10), a location request message (313) for a terminal, said request message indicating an identifier of the terminal and a second location server (25); a determination unit (82) for determining location information of a terminal on the basis of an identifier of the terminal; adapted to determine location information of a terminal in the first telecommunications subsystem; and a second interface unit (83) adapted to transmit said location information to said second location server (25); and
- the second location server (25), different from the first location server, adapted to cooperate with the call centre, and comprising a first interface unit (91) adapted to receive the location information of the terminal in the first telecommunications subsystem (10) from the first location server and a second interface unit (92) adapted to transmit said location information to the call centre, said second location server (25) being a global server, the call centre being configured so as to request the location information from the second location server (25),
the telecommunications system furthermore comprising a routing device according to Claim 4,
wherein the routing assistance information corresponds to information relating to the type of network access, which is indicated in the call initiation message, said system being configured so as to implement the method according to Claim 1.

6. Computer program intended to be installed in a system according to Claim 5, comprising instructions able to implement a method according to any one of Claims 1 to 3 when the program is executed by processing means of the system according to Claim 5.
